(19) Europäisches Patentamt European Patent Office Office européen des brevets

(11) **EP 4 465 155 A1**

(12) **EUROPEAN PATENT APPLICATION**
published in accordance with Art. 153(4) EPC

(43) Date of publication:
**20.11.2024 Bulletin 2024/47**

(21) Application number: **22920623.0**

(22) Date of filing: **23.12.2022**

(51) International Patent Classification (IPC):
*G06F 3/042* (2006.01) *G02B 5/00* (2006.01)
*G02B 5/04* (2006.01) *G02B 5/08* (2006.01)
*G02B 30/56* (2020.01) *G06F 3/0346* (2013.01)

(52) Cooperative Patent Classification (CPC):
**G02B 5/00; G02B 5/04; G02B 5/08; G02B 30/56;
G06F 3/0346; G06F 3/042**

(86) International application number:
**PCT/JP2022/047724**

(87) International publication number:
**WO 2023/136106 (20.07.2023 Gazette 2023/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.01.2022 JP 2022003760**

(71) Applicant: **Toppan Holdings Inc.**
**Tokyo 110-0016 (JP)**

(72) Inventor: **DAIKU, Yasuhiro**
**Tokyo 110-0016 (JP)**

(74) Representative: **TBK**
**Bavariaring 4-6**
**80336 München (DE)**

(54) **AERIAL DISPLAY APPARATUS**

(57)      An aerial display apparatus includes: a display device (20) which displays an image; an optical device (40) which is arranged to receive light from the display device (20), and reflects the light from the display device (20) to a side opposed to the display device (20) to form an aerial image; and a sensing device (50) arranged between the display device (20) and the optical device (40) and outside an area occupied by the optical device (40). The sensing device (50) includes: a light source unit (52) which emits infrared light toward the optical device (40); and a plurality of cameras (53) which detect infrared light reflected in sequence by an object and the optical device (40) .

FIG.3

EP 4 465 155 A1

## Description

FIELD

The present invention relates to an aerial display apparatus.

BACKGROUND

Aerial display apparatuses capable of displaying images, moving images and the like as aerial images have been researched, and are expected to serve as new human-machine interfaces. For example, an aerial display apparatus that reflects light emitted from the display surface of a display device and form a real image in an aerial space, using a dihedral corner reflector array, in which dihedral corner reflectors are arranged into an array, has been proposed. With the display method using a dihedral corner reflector array, a real image (aerial image) can be displayed at a plane-symmetric position without any aberration.

If a user can operate the aerial image with his or her fingertip, he or she can input information without directly touching the fingertip like a touch panel. The information can thus be input hygienically. In order to sense the same plane as the aerial image, a sensor need to be provided close to the aerial image. In order to perform the sensing along the aerial image, a device including a sensor need to be provided around the aerial image.

CITATION LIST

PATENT LITERATURE

Patent Document 1: Jpn. Pat. Appln. KOKAI Publication No. 2017-67933

SUMMARY

TECHNICAL PROBLEM

The present invention provides an aerial display apparatus capable of detecting an object close to an aerial image.

SOLUTION TO PROBLEM

A first aspect of the present invention provides an aerial display apparatus comprising:

a display device which displays an image;
an optical device which is arranged to receive light from the display device, and reflects the light from the display device to a side opposed to the display device to form an aerial image; and
a first sensing device arranged between the display device and the optical device and outside an area occupied by the optical device,
wherein the first sensing device includes:

a light source unit which emits infrared light toward the optical device; and
a plurality of cameras which detect infrared light reflected in sequence by an object and the optical device.

A second aspect of the present invention provides the aerial display apparatus according to the first aspect, wherein:

the optical device includes a planar base member and a plurality of optical elements provided under the base member, each extending in a first direction and arranged in a second direction orthogonal to the first direction; and
each of the optical elements has an incident surface and a reflecting surface which are inclined with respect to a normal direction of the base member and which are in contact with each other.

A third aspect of the present invention provides the aerial display apparatus according to the second aspect, wherein an angle of the reflecting surface with respect to the normal direction of the base member is set such that an angle of light incident upon the reflecting surface is larger than a critical angle.
A fourth aspect of the present invention provides the aerial display apparatus according to the second aspect, wherein an angle of the incident surface with respect to the normal direction of the base member is set such that an angle of light incident upon the incident surface is smaller than a critical angle.

A fifth aspect of the present invention provides the aerial display apparatus according to the second aspect, wherein the first sensing device is arranged in the second direction of the optical device.

A sixth aspect of the present invention provides the aerial display apparatus according to the first aspect, wherein the display device and the optical device are arranged in parallel with each other.

A seventh aspect of the present invention provides the aerial display apparatus according to the first aspect, further comprising an alignment control device arranged between the display device and the optical device to transmit part of light from the display device.

An eighth aspect of the present invention provides the aerial display apparatus according to the first aspect, further comprising a housing which houses the display device, the optical device and the first sensing device.

A ninth aspect of the present invention provides the aerial display apparatus according to the first aspect, further comprising a control unit which calculates a position of the object, based on image signals of the cameras.

A tenth aspect of the present invention provides the aerial display apparatus according to the first aspect, further comprising a second sensing device which is arranged between the display device and the optical device and outside the area occupied by the optical device, which is opposed to the first sensing device with respect to the optical device, and which has a configuration similar to a configuration of the first sensing device.

ADVANTAGEOUS EFFECTS

According to the present invention, an aerial display apparatus capable of detecting an object close to an aerial image.

BRIEF DESCRIPTION OF THE DRAWINGS

FIG. 1 is a perspective view of an aerial display apparatus according to a first embodiment of the present invention.
FIG. 2 is a perspective view of a display module and a sensing device shown in FIG. 1.
FIG. 3 is a side view of the display module and sensing device shown in FIG. 1 when viewed from the Y direction.
FIG. 4A is a plan view of an alignment control device shown in FIG. 2.
FIG. 4B is a sectional view of the alignment control device taken along line A-A' of FIG. 4A.
FIG. 5 is a perspective view and a partially enlarged view of an optical device shown in FIG. 2.
FIG. 6 is a schematic plan view of the sensing device shown in FIG. 1.
FIG. 7 is a block diagram of the aerial display apparatus.
FIG. 8 is a perspective view illustrating the state of reflection of light on the optical device.
FIG. 9 is a side view of an XZ plane illustrating the state of reflection of light on the optical device.
FIG. 10 is a side view of a YZ plane illustrating the state of reflection of light on the optical device.
FIG. 11 is a diagram illustrating the angle conditions of the incident surface and reflecting surface of the optical device.
FIG. 12 is a ray tracing diagram of the aerial display apparatus.
FIG. 13 is a diagram illustrating an operation of the sensing device.
FIG. 14 is a ray tracing diagram of the sensing device.
FIG. 15 is a perspective view of an aerial display apparatus according to a second embodiment of the present invention.
FIG. 16 is a side view of an aerial display apparatus according to a third embodiment of the present invention.
FIG. 17 is a perspective view of an aerial display apparatus according to a fourth embodiment of the present invention.
FIG. 18 is a side view of a display module and a sensing device shown in FIG. 17 when viewed from the Y direction.
FIG. 19A is a side view of an optical device shown in FIG. 18 when viewed from the Y direction.
FIG. 19B is a bottom view of the optical device shown in FIG. 18.
FIG. 20A is a plan view of a light path deflection device shown in FIG. 18.
FIG. 20B is a side view of the light path deflection device shown in FIG. 18 when viewed from the Y direction.
FIG. 21 is a perspective view of an aerial display apparatus according to a modification of a fifth embodiment of the present invention.

DETAILED DESCRIPTION

Embodiments will be described below with reference to the drawings. These drawings are schematically or conceptually illustrated, and the dimensions, ratios, and the like in each drawing may not always be the same as actual dimensions and ratios. Further, among the drawings illustrating the same portion, the dimensional relationships or ratios may differ from each other. In particular, the embodiments described below exemplify a device and a method that embody the technical idea of the present invention, and therefore the technical idea of the present invention should not be identified by the shape, configuration, arrangement, etc. of the structural components. In the description below, the same reference numerals are given to elements having the same functions and configurations, and redundant explanations may be omitted.

<First Embodiment>

<1-1> Configuration of Aerial display apparatus 1

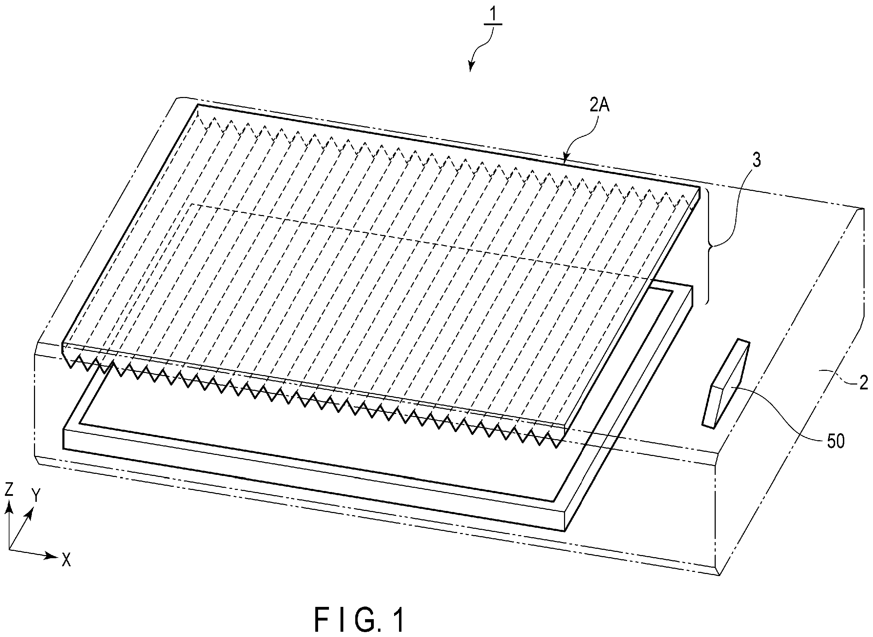

FIG. 1 is a perspective view of an aerial display apparatus 1 according to a first embodiment of the present invention. In FIG. 1, the X direction represents a direction along one side of the aerial display apparatus 1, the Y direction represents a direction orthogonal to the X direction on a horizontal plane, and the Z direction represents a direction orthogonal to the XY plane (also referred to as a normal direction). The aerial display apparatus 1 includes a housing 2, a display module 3 and a sensing device 50.

The housing 2 houses the display module 3 and the sensing device 50. That is, the housing 2, display module 3 and sensing device 50 are formed integrally as one unit. The housing 2 has a rectangular parallelepiped shape and a box shape. The housing 2 includes a support member (not shown) that fixes the display module 3 and sensing device 50 at the positions illustrated. The housing 2 has an opening 2A through which the top surface (light-emitting surface) of the display module 3 is exposed. The housing 2 is formed of metal or resin.

The display module 3 is a device that displays an image (including a moving image). The display module 3 displays an aerial image in an aerial space above the light-emitting surface thereof. The aerial image is a real image formed in an aerial space. The display module 3 includes a plurality of elements laminated at intervals in the Z direction. For the sake of simplicity, in FIG. 1, some of the elements included in the display module 3 are extracted and shown. The display module 3 will be described in detail later.

The sensing device 50 is a device for detecting an object included in a predetermined region close to the aerial image. The sensing device 50 has a rectangular parallelepiped shape. The sensing device 50 emits light toward a predetermined direction. The sensing device 50 detects light reflected by the object. The sensing device 50 will be described in detail later.

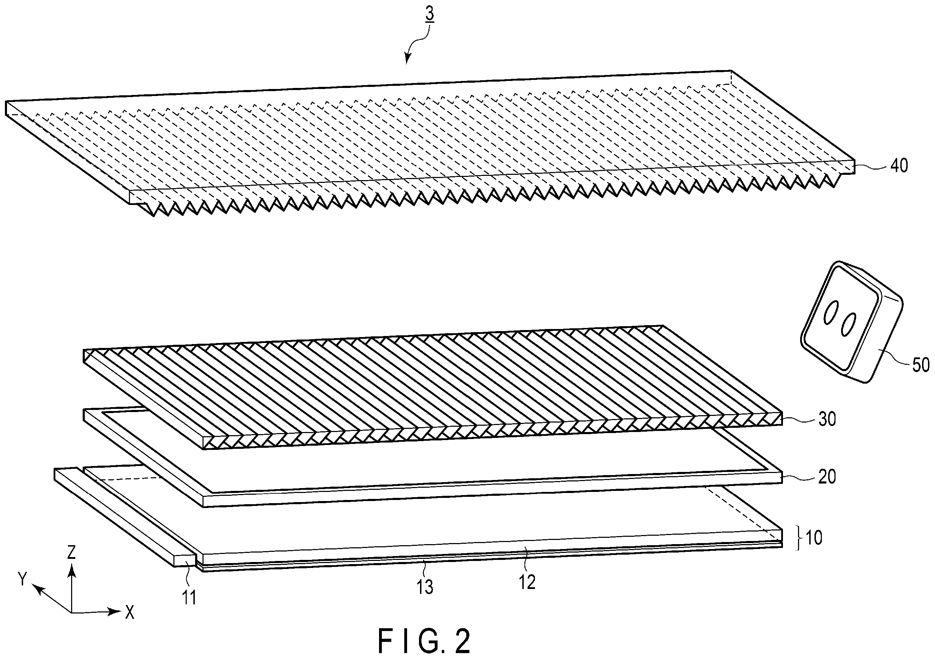

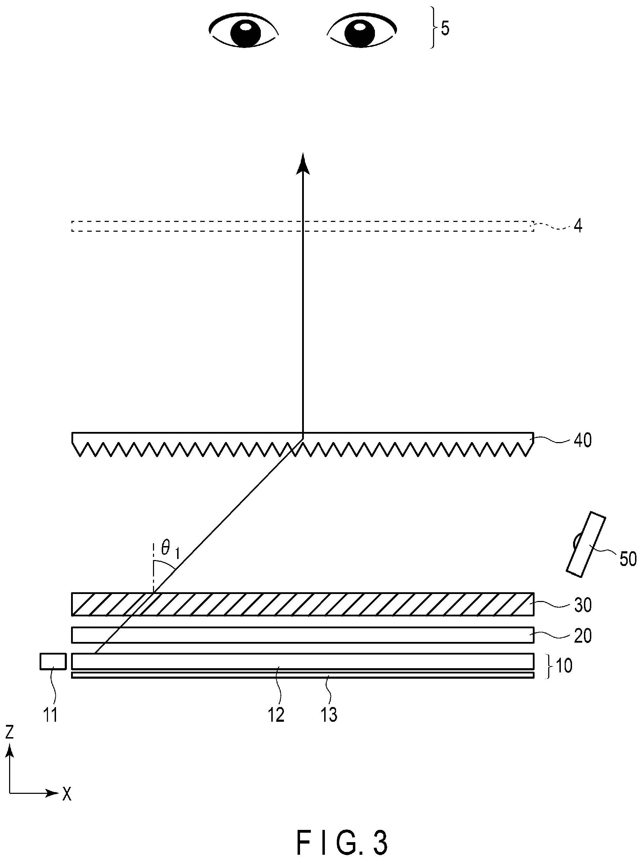

FIG. 2 is a perspective view of the display module 3 and the sensing device 50 shown in FIG. 1. FIG. 3 is a side view of the display module 3 and the sensing device 50 shown in FIG. 1 when viewed from the Y direction.

The display module 3 includes an illumination device (also referred to as a backlight) 10, a display device 20, an alignment control device 30 and an optical device 40. The illumination device 10, display device 20, alignment control device 30 and optical device 40 are arranged in parallel with each other. The illumination device 10, display device 20, alignment control device 30 and optical device 40 are fixed to the positions shown in FIG. 2 by a support member (not shown) provided in the housing 2.

The illumination device 10 emits illumination light toward the display device 20. The illumination device 10 includes a light source unit 11, a light guide plate 12 and a reflection sheet 13. The illumination device 10 is, for example, a sidelight illumination device. The illumination device 10 constitutes a surface light source. The illumination device 10 may be so configured that the light intensity peaks in the oblique direction of angle $\theta_1$ to be described later.

The light source unit 11 emits light. The light source unit 11 includes a plurality of light emitting elements containing, for example, white LEDs (light emitting diodes). The light guide plate 12 guides the illumination light from the light source unit 11 and emits it from the top surface. The reflection sheet 13 reflects the illumination light, which is emitted from the bottom of the light guide plate 12, toward the light guide plate 12 again. The illumination device 10 may include a member (including a prism sheet and a diffusion sheet) that improves optical characteristics on the top surface of the light guide plate 12.

The display device 20 is a transmission display device. The display device 20 is configured by a liquid crystal display device, for example. The driving mode of the display device 20 is not particularly limited, and a twisted nematic (TN) mode, a vertical alignment (VA) mode or a homogeneous mode can be used. The display device 20 receives the illumination light from the illumination device 10. The display device 20 transmits the illumination light to perform light modulation. Then, the display device 20 displays a desired image on its display surface.

The alignment control device 30 has a function of reducing unnecessary light. The unnecessary light is a light component that does not contribute to generating an aerial image and a light component that transmits the optical device 40 in the normal direction. The alignment control device 30 is configured to transmit light components in a predetermined angle range centered in an oblique direction of angle $\theta_1$ with respect to the normal direction, and to shield light components outside the angle range. The area of the alignment control device 30 is set to be larger than or equal to the area of the display device 20.

The optical device 40 reflects the light incident from the bottom toward the top. The optical device 40 also reflects light incident obliquely from the bottom in the front (normal) direction, for example. Then, the optical device 40 forms an aerial image 4 in an aerial space. The area of the optical device 40 is set to be larger than or equal to the area of the display device 20. The aerial image 4 is parallel to the device surface of the optical device 40 and is a two-dimensional image. The device surface is a virtual plane in which the optical device 40 extends in the in-plane direction. The device surface has the same meaning as in-plane. The same meaning applies to the device surfaces of other devices. A viewer 5 in front of the optical device 40 can visually recognize the aerial image 4.

<1-1-1> Configuration of Alignment control device 30

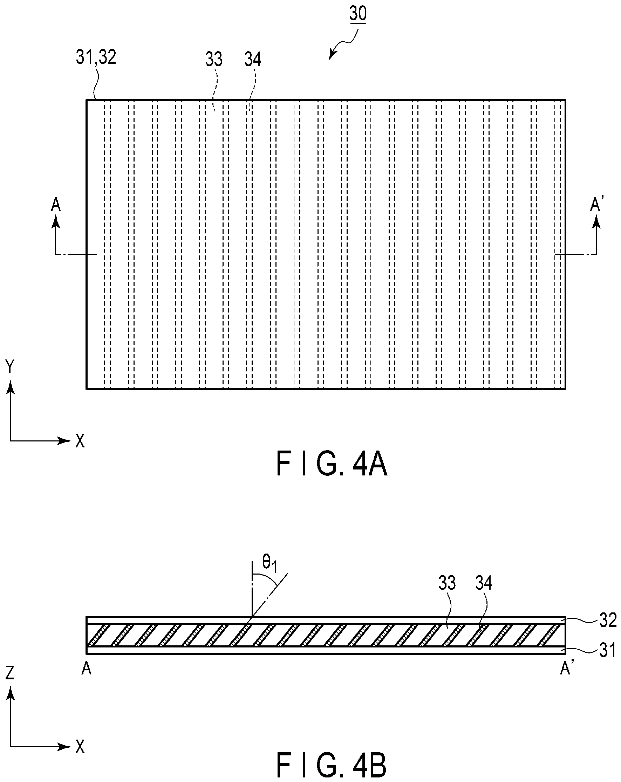

FIG. 4A is a plan view of the alignment control device 30 shown in FIG. 2. FIG. 4B is a sectional view of the alignment control device 30 taken along line A-A' of FIG. 4A.

Base members 31 and 32 are each formed in a rectangular planar shape. On the base member 31, a plurality of transparent members 33 each extend in the Y direction and are arranged in the X direction. On the base member 31, a plurality of light-shielding members 34 each extend in the Y direction and are arranged in the X direction. The transparent members 33 and light-shielding members 34 are arranged alternately such that adjacent members come into contact with each other. The base member 32 is provided on the transparent members 33 and light-shielding members 34.

The transparent members 33 extend in an oblique direction at an angle $\theta_1$ with respect to the normal direction of the base member 31 in the X direction. The transparent members 33 are each a parallelogram whose sides are inclined by an angle $\theta_1$ in the XZ section. The transparent members 33 transmit light.

The light-shielding members 34 extend in an oblique direction at an angle $\theta_1$ with respect to the normal direction of the base member 31 in the X direction. The light-shielding members 34 are each a parallelogram whose sides are inclined by an angle $\theta_1$ in the XZ section. The light-shielding members 33 shield light.

Two adjacent light-shielding members 34 are so arranged that their ends slightly overlap with each other in the Z direction.

As the base members 31 and 32 and transparent members 33, transparent resin such as acrylic resin is used. As the light-shielding members 34, For example, a resin mixed with a black dye is used.

The alignment control device 30 may be configured by excluding one or both of the base members 31 and 32. If the transparent members 33 and the light-shielding members 34 are arranged alternately, the function of the alignment control device 30 can be achieved.

The alignment control device 30 thus configured can transmit display light such that the light intensity in the oblique direction at angle $\theta_1$ with respect to the normal direction is the highest. For example, the alignment control device 30 is configured to block light components outside the range of $30° \pm 30°$ with respect to the normal direction. Preferably, the alignment control device 30 is configured to block light components outside the range of $30° \pm 20°$ with respect to the normal direction.

As a modification, the alignment control device 30 may be arranged between the illumination device 10 and the display device 20. The alignment control device 30 may also be arranged closer to the optical device 40. In addition, the alignment control device 30 may be omitted to constitute the aerial display apparatus 1.

<1-1-2> Configuration of Optical Device 40

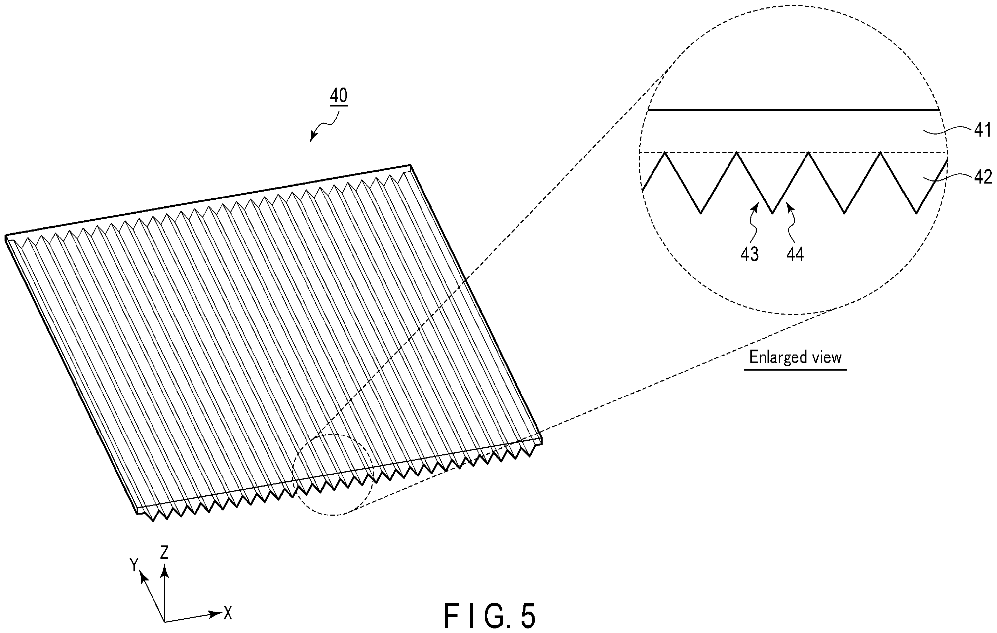

FIG. 5 is a perspective view and a partially enlarged view of the optical device 40 shown in FIG. 2. The partially enlarged view of FIG. 5 is an enlarged view of the XZ plane.

The optical device 40 includes a base member 41 and a plurality of optical elements 42. The base member 41 is formed in a planar shape in the XY plane and has a rectangular parallelepiped.

The optical elements 42 are provided on the bottom of the base member 41. Each of the optical elements 42 is formed of a triangular prism. The optical elements 42 are so arranged that three sides of the triangular prism are parallel to the XY plane and one side thereof is in contact with the base member 41. The optical elements 42 extend in the Y direction and are arranged side by side in the X direction. In other words, the optical elements 42 have a sawtooth shape.

The optical elements 42 each have an incident surface 43 and a reflecting surface 44. The incident surface 43 is a surface on which light is incident from the alignment control device 30. The reflecting surface 44 is a surface that reflects, at the interior of the optical element 42, light incident upon the incident surface 43 from outside.

The optical elements 42 are formed integrally with the base member 41, for example, by the same transparent material as that of the base member 41. The base member 41 and the optical elements 42 may individually be formed, and the optical elements 42 may be bonded to the base member 41. As the transparent material constituting the base member 41 and the optical elements 42, for example, acrylic resin or glass is used.

The optical device 40 reflects the incident light inside to form a real image in an aerial space. The optical device 40 also forms a real image in front of the device surface of the optical device.

<1-1-3> Configuration of Sensing Device 50

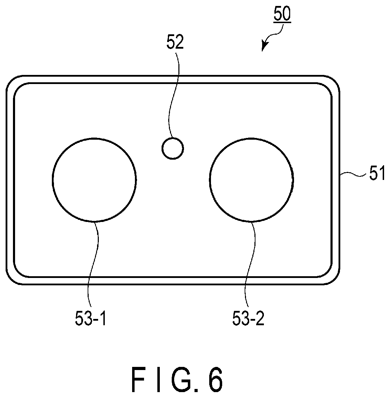

FIG. 6 is a schematic plan view of the sensing device 50 shown in FIG. 1. The sensing device 50 includes a housing 51, a light source unit 52 and two cameras 53-1 and 53-2. The number of cameras 53 may be three or more.

The housing 51 houses the light source unit 52 and cameras 53-1 and 53-2. The housing 51 is formed of a box-shaped case and a cover that covers the top of the case. The cover of the housing 51 includes an opening through which the light source unit and the cameras are exposed.

The light source unit 52 emits, for example, infrared light in a direction perpendicular to the device surface of the sensing device 50. The light emitted by the light source unit 52 preferably has a wavelength that does not affect an image displayed by the display device 20. The light source unit 52 includes one or more LEDs.

The cameras 53-1 and 53-2 detect infrared light reflected by an object. The cameras 53-1 and 53-2 are configured by infrared cameras and include an image pickup element. The image pickup element includes a charge coupled device (CCD) sensor or a complementary metal oxide semiconductor (CMOS) sensor. The cameras 53-1 and 53-2 constitute a stereo camera. The stereo camera is capable of imaging an object from a plurality of directions using a plurality of cameras (e.g., two cameras) to acquire three-dimensional position information. That is, the stereo camera is capable of acquiring three-dimensional position information obtained by adding depth information to two-dimensional position information parallel to the aerial image.

As shown in FIG. 2, the sensing device 50 is arranged outside the area occupied by the optical device 40 in planar view and is arranged between the display device 20 and the optical device 40. The sensing device 50 is arranged along the X direction with respect to the optical device 40 so as to face the incident surface 43 of the optical device 40. The sensing device 50 is so arranged that the optical device 40 is irradiated with emitted light and the device surface faces obliquely upward. The sensing device 50 is inclined at an angle of, for example, 10 degrees to 60 degrees with respect to the Z direction.

<1-2> Block Configuration of Aerial display apparatus 1

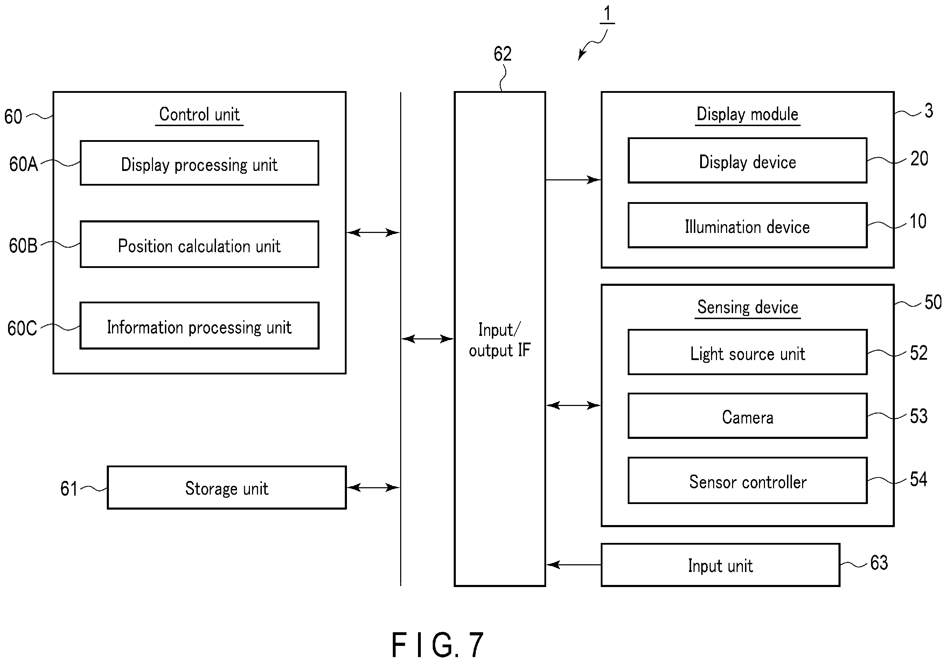

FIG. 7 is a block diagram of the aerial display apparatus 1. The aerial display apparatus 1 includes a control unit 60, a storage unit 61, an input/output interface (input/output IF) 62, a display module 3 and an input unit 63. The control unit 60, storage unit 61 and input/output interface 62 are connected to each other via a bus.

The input/output interface 62 is connected to the display module 3, sensing device 50 and input unit 63. The input/output interface 62 performs an interface process according to a predetermined standard on each of the display module 3, sensing device 50 and input unit 63.

The display module 3 includes the illumination device 10 and display device 20.

The sensing device 50 includes the light source unit 52, cameras 53 and sensor controller 54. The sensor controller 54 controls the operations of the light source unit 52 and cameras 53 under the control of the control unit 60. The sensor controller 54 controls the light emission timing of the light source unit 52. The sensor controller 54 receives image signals from the cameras 53.

The control unit 60 includes one or more processors such as a central processing unit (CPU) and a microprocessing unit (MPU). The control unit 60 executes the programs stored in the storage unit 61 to perform a variety of functions. The control unit 60 includes a display processing unit 60A, a position calculation unit 60B and an information processing unit 60C.

The display processing unit 60A controls the operation of the display module 3 (specifically, the illumination device 10 and the display device 20). The display processing unit 60A transmits an image signal to the display module 3 to cause the display module 3 to display the image.

The position calculation unit 60B controls the operation of the sensing device 50. The position calculation unit 60B receives an image signal from the sensing device 50. The position calculation unit 60B causes the sensing device 50 to form a detection region for detecting an object using infrared light. The position calculation unit 60B calculates the position of an object that enters the detection region, based on the image signals of the cameras 53. The distance to the object is calculated using the principle of triangulation that is a known technique. The detected position includes a position where a user touches the aerial image with his or her finger.

The information processing unit 60C generates an image to be displayed by the aerial display apparatus 1. The information processing unit 60C is capable of using image data stored in the storage unit 61. The information processing unit 60C may acquire image data from outside using a communication function (not shown).

The storage unit 61 includes a nonvolatile storage device such as a read only memory (ROM), a hard disk drive (HDD) and a solid state drive (SSD) and a volatile storage device such as a random access memory (RAM) and a register. The storage unit 61 stores programs to be executed by the control unit 60. The storage unit 61 stores various items of data necessary for controlling the control unit 60. The storage unit 61 stores data of images to be displayed by the aerial display apparatus 1.

The input unit 63 receives information input by a user. The information processing unit 60C is capable of selecting an image, based on the information received by the input unit 63.

<1-3> Operation of Aerial display apparatus 1

Next is a description of the operation of the aerial display apparatus 1 configured as described above.

<1-3-1> Display Operation

The arrow in FIG. 3 indicates a light path. As shown in FIG. 3, light emitted from the display device 20 enters the alignment control device 30. Of the light emitted from the display device 20, a light component having angle $\theta_1$ (including a light component having a predetermined angle range with angle $\theta_1$ centered) is transmitted through the alignment control device 30. The light transmitted through the alignment control device 30 enters the optical device 40. The optical device 40 forms the incident light in an aerial space opposite to the alignment control device 30, and displays the aerial image 4 in the aerial space.

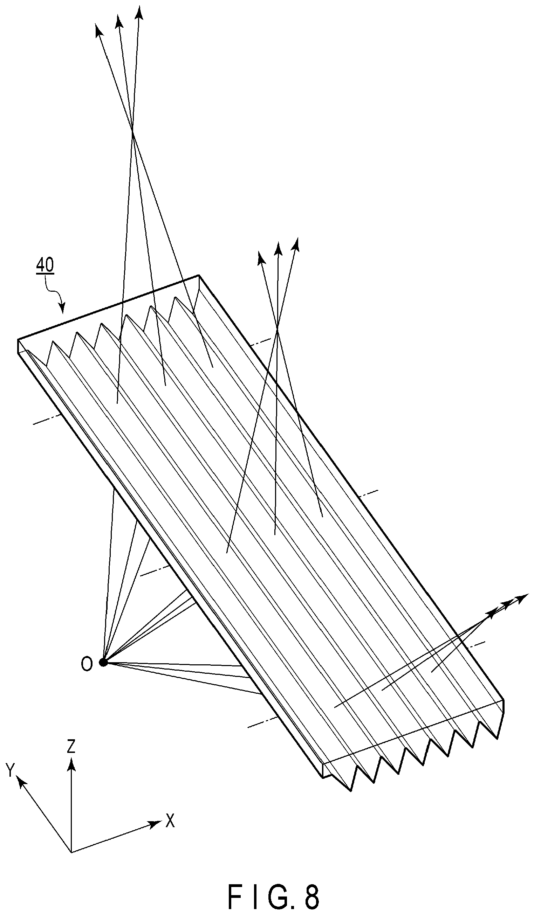

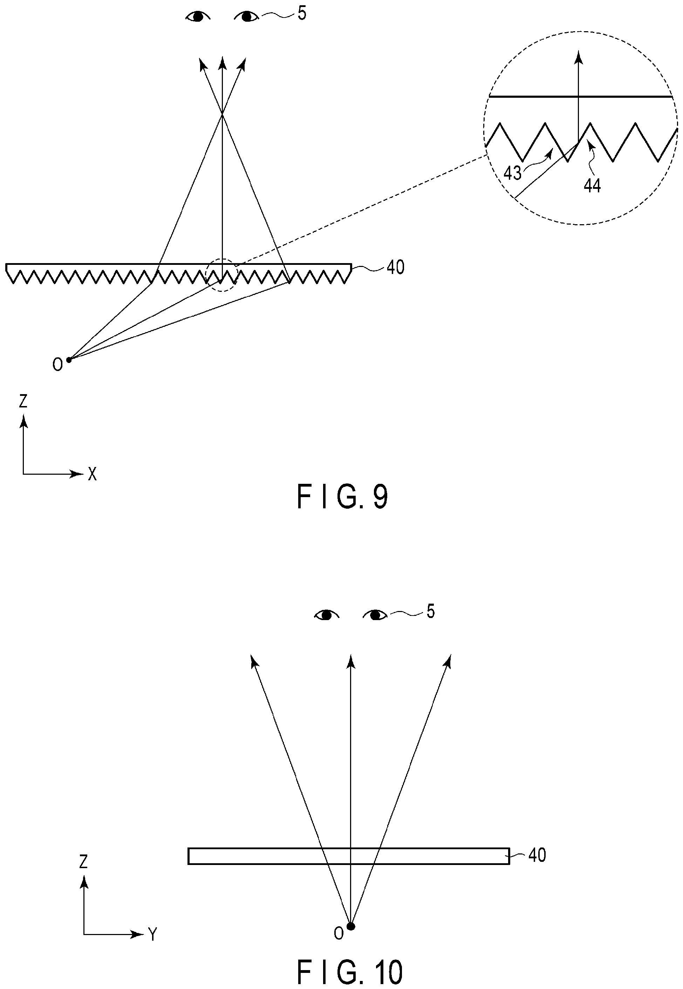

FIG. 8 is a perspective view illustrating the state of reflection of light on the optical device 40. FIG. 9 is a side view of an XZ plane illustrating the state of reflection of light in the optical device 40. The view of FIG. 9 shows the optical device 40 in a state where both eyes of the viewer 5 (that is, a line connecting the eyes) are parallel to the X direction. FIG. 10 is a side view of a YZ plane illustrating the state of reflection of light in the optical device 40. The view of FIG. 10 shows the optical device 40 in a state where both eyes of the viewer 5 are parallel to the Y direction.

Light emitted from an optional point "o" on the device surface of the alignment control device 30 enters the incident surface 43 of the optical device 40 and reaches the reflecting surface 44. The light that has reached at an angle greater than a critical angle with respect to the normal direction of the reflecting surface 44 is totally reflected by the reflecting surface 44 and emitted from a plane opposite to the side where the optical element 42 of the optical device 40 is formed. The critical angle is the minimum incidence angle above which total reflection occurs. The critical angle is the angle of the incidence plane with respect to the perpendicular.

In the XZ plane of FIG. 9, the light emitted from the point "o" is totally reflected by the reflecting surface 44 of the optical element 42, and the light is formed into an aerial image in an aerial space.

In the YZ plane of FIG. 10, the light emitted from the point "o" is not reflected by the reflecting surface 44 of the optical element 42 or the light is not formed into an image in an aerial space; thus, it does not contribute to the generation of an aerial image.

That is, the condition under which the viewer 5 can recognize the aerial image is that both eyes of the viewer 5 are parallel to or close to the X direction (e.g., ±10 degrees with respect to the X direction). If the viewer 5 moves his or her viewpoint along the Y direction in a state where both eyes are parallel to or close to the X direction, he or she can always recognize the aerial image.

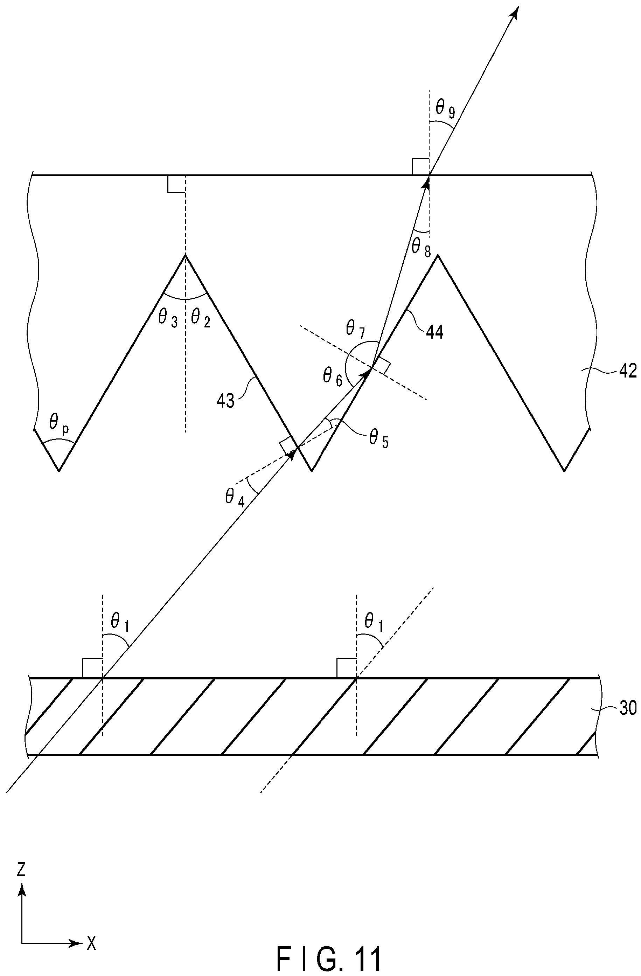

FIG. 11 is a diagram illustrating the angle conditions of the incident surface 43 and the reflecting surface 44 in the optical device 40.

Assume that the angle of the incident surface 43 with respect to the Z direction (a direction normal to the device surface) is $\theta_2$, the angle of the reflecting surface 44 with respect to the Z direction is $\theta_3$, and the angle formed between the incident surface 43 and the reflecting surface 44 is $\theta_p$. The angle $\theta_p$ is expressed by the following equation (1).

$$\theta_p = \theta_2 + \theta_3 \qquad \ldots \ (1)$$

The light emitted from the alignment control device 30 at angle $\theta_1$ enters the incident surface 43. Assume that the refractive index of the material of the optical device 40 is $n_p$, the refractive index of the air is 1, the incident angle on the incident surface 43 is $\theta_4$, the refraction angle is $\theta_5$, the incident angle on the reflecting surface 44 is $\theta_6$, the reflection angle is $\theta_7 (= \theta_6)$, the incident angle on the top of the alignment control device 30 is $\theta_8$, and the refraction angle is $\theta_9$. The refraction angle $\theta_9$ corresponds to the output angle. The output angle $\theta_9$ is expressed by the following equation (2).

$$\theta_9 = \sin^{-1}(n_p * \sin(\sin^{-1}((1/n_p) * \sin(90° - (\theta_1 + \theta_2))) + \theta_2 + 2\theta_3 - 90°)) \ \ldots \ (2)$$

The critical angle on the reflecting surface 44 is given by the following expression (3).

$$\text{critical angle} < \theta_6 (= \theta_7)$$
$$\text{critical angle} = \sin^{-1}(1/n_p) \qquad \ldots \ (3)$$

That is, the incident angle $\theta_6$ on the reflecting surface 44 is set larger than the critical angle on the reflecting surface 44. In other words, the angle $\theta_3$ of the reflecting surface 44 is set such that the incident angle of light incident upon the reflecting surface 44 is larger than the critical angle.

In addition, the light incident upon the incident surface 43 is set so as not to be totally reflected by the incident surface 43. That is, the angle $\theta_2$ of the incident surface 43 is set such that the incident angle of light incident upon the incident surface 43 is smaller than the critical angle.

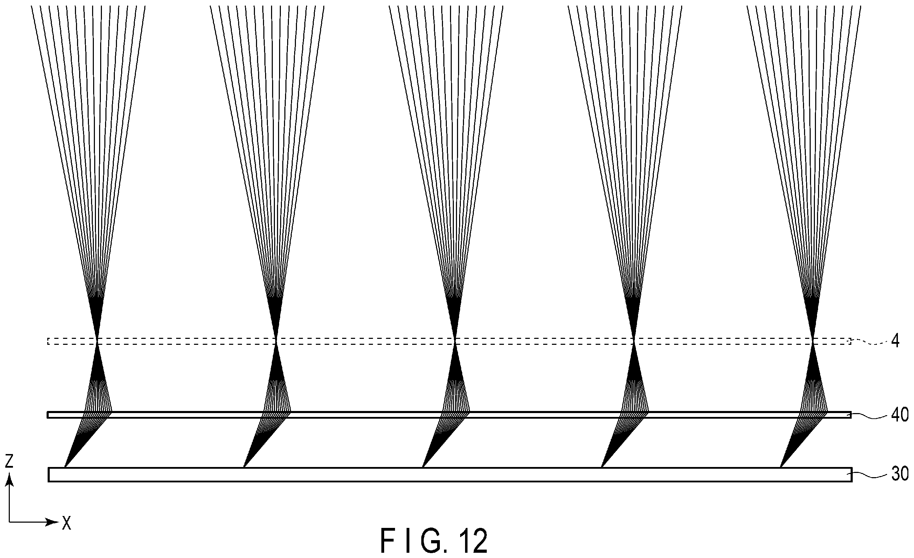

FIG. 12 is a ray tracing diagram of the aerial display apparatus 1. The parameters shown in FIG. 12 are $\theta_1$ = 35 degrees, $\theta_3$ = 22.5 degrees, and $\theta_p$ = 45 degrees. The light emitted from the alignment control device 30 is reflected by the optical device 40 to form the aerial image 4.

<1-3-2> Sensing Operation

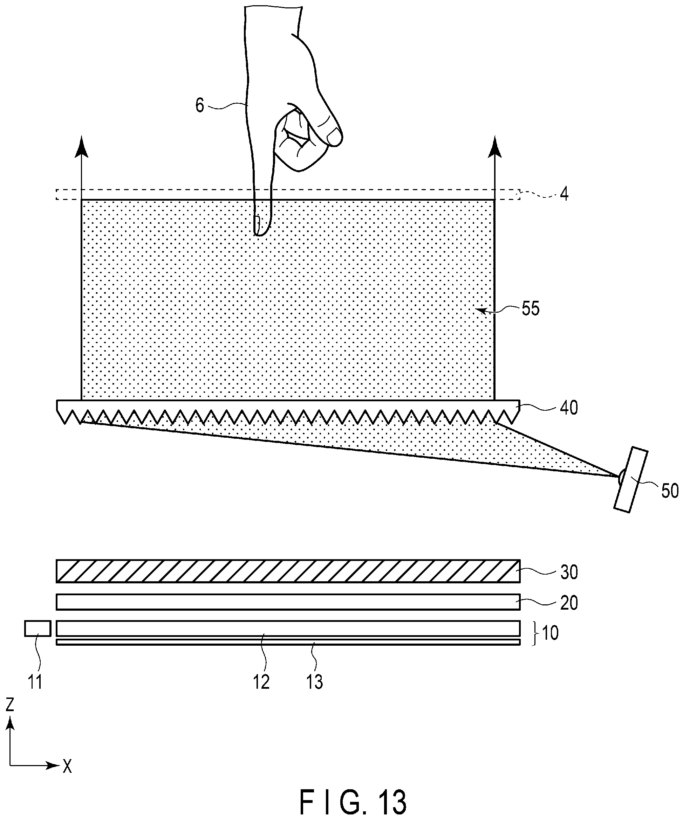

Next is a description of a sensing operation. FIG. 13 is a diagram illustrating the operation of the sensing device 50.

The light source unit 52 of the sensing device 50 emits infrared light toward the optical device 40. The light source unit 52 emits the infrared light so as to have a predetermined spread angle. The spread angle is an angle in a direction perpendicular to the device surface of the sensing device 50. The light source unit 52 is configured to radiate infrared light all over the surface of the optical device 40. The light source 52 may have a lens for controlling a radiation area.

The infrared light emitted from the light source unit 52 enters through the reflecting surface 44 of the optical device 40 and is totally reflected by the incident surface 43. The infrared light reflected by the optical device 40 is emitted toward the opposite side of the sensing device 50 of the optical device 40 and almost in the normal direction. Thus, a detection region 55 is formed by the infrared light.

FIG. 13 illustrates a viewer's finger as an object 6. The infrared light emitted from the optical device 40 is reflected by the object 6. The light reflected by the object 6 follows a light path opposite to the infrared light emitted from the light source unit 52 and is totally reflected by the incident surface 43 of the optical device 40. The infrared light reflected by the optical device 40 is received and detected by the cameras 53 of the sensing device 50.

The image signals picked up by the cameras 53 are transmitted to the control unit 60. Based on the image signals of the cameras 53, the position calculation unit 60B calculates the position of the object 6 that is present in the detection region 55.

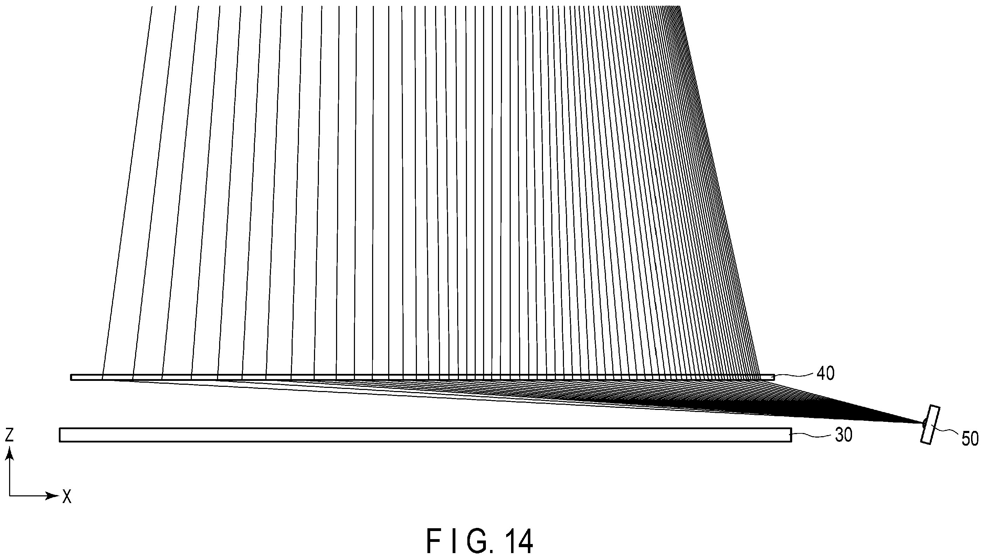

FIG. 14 is a ray tracing diagram of the sensing device 50. The infrared light emitted from the light source unit 52 of the sensing device 50 is radiated almost all over the surface of the optical device 40.

The infrared light reflected by the optical device 40 has a higher light density toward the right side (closer to the sensing device 50) and a lower light density toward the right side (farther from the sensing device 50). The infrared light intensity may be defined by the photon flux density.

<1-4> Advantages of First Embodiment

The first embodiment can provide the aerial display apparatus 1 capable of detecting an object close to the aerial image 4.

By utilizing the reflected light of the optical device 40, a single sensing device 50 can form a wide-range detection region 55. Also, it can detect the object 6 in a wide-range region including the aerial image 4.

By imaging the object 6 using the cameras 53, three-dimensional position information can be acquired.

In addition, the sensing device 50 can be housed in the housing 2. Thus, the aerial display apparatus 1 including the sensing device 50 can be formed integrally with the housing as one unit, and the aerial display apparatus 1 can be decreased in size.

The aerial display apparatus 1 is capable of displaying an aerial image while securing the quality of display.

If both eyes of the viewer 5 view the optical device 40 in a state parallel to or close to the X direction (that is, a direction in which the optical elements 42 are arranged), the viewer 5 can visually recognize the aerial image. If the viewer 5 moves his or her viewpoint along the Y direction in a state where both eyes are parallel to or close to the X direction, he or she can always recognize the aerial image. That is, the viewing angle can be secured when both eyes of the viewer 5 are parallel to or close to the X direction.

In addition, a plurality of elements constituting the aerial display apparatus 1 can be arranged in parallel. Thus, the aerial display apparatus 1 can be decreased in size in the Z direction.

The aerial image can be displayed in the front direction of the aerial display apparatus 1.

<2> Second Embodiment

The second embodiment is directed to an example in which the aerial display apparatus 1 is configured to include two sensing devices 50.

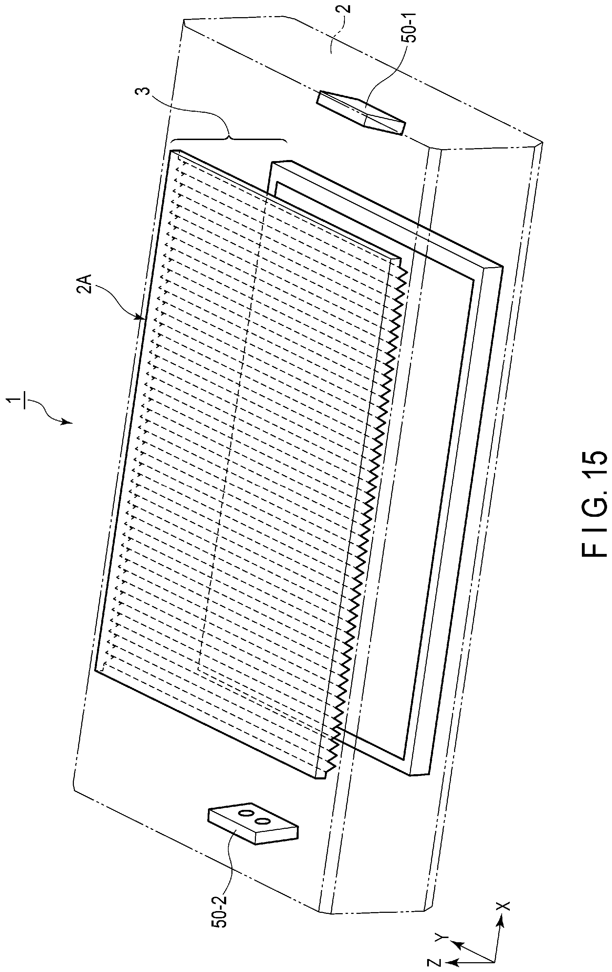

FIG. 15 is a perspective view of an aerial display apparatus 1 according to a second embodiment of the present invention.

The aerial display apparatus 1 includes two sensing devices 50-1 and 50-2. The configuration of each of the sensing devices 50-1 and 50-2 is the same as that of the sensing device 50 described in the first embodiment.

The sensing device 50-1 is arranged outside the area occupied by the optical device 40 in planar view and is arranged between the display device 20 and the optical device 40. The sensing device 50-1 is arranged on the right side of the optical device 40 in the X direction so as to face the incident surface 43 of the optical device 40. The sensing device 50-1 is so arranged that the optical device 40 is irradiated with emitted light and the device surface faces obliquely upward. The sensing device 50-1 is inclined at an angle of, for example, 10 degrees to 60 degrees with respect to the Z direction.

The sensing device 50-2 is arranged outside the area occupied by the optical device 40 in planar view and is arranged between the display device 20 and the optical device 40. The sensing device 50-2 is arranged on the left side of the optical device 40 in the X direction so as to face the reflecting surface 44 of the optical device 40. The sensing device 50-2 is so arranged that the optical device 40 is irradiated with emitted light and the device surface faces obliquely upward. The sensing device 50-2 is inclined at an angle of, for example, 10 degrees to 60 degrees with respect to the Z direction.

Based on the image signals of the sensing devices 50-1 and 50-2, the position calculation unit 60B calculates the position of an object that has entered a detection region.

According to the second embodiment, the intensity of infrared light emitted from the sensing devices 50-1 and 50-2 can be made more uniform in the X direction. Thus, the sensitivity of the sensing device 50 can be improved. The other advantages are the same as those of the first embodiment.

<3> Third Embodiment

A third embodiment is directed to a configuration example in which the display device 20 is arranged obliquely to the optical device 40.

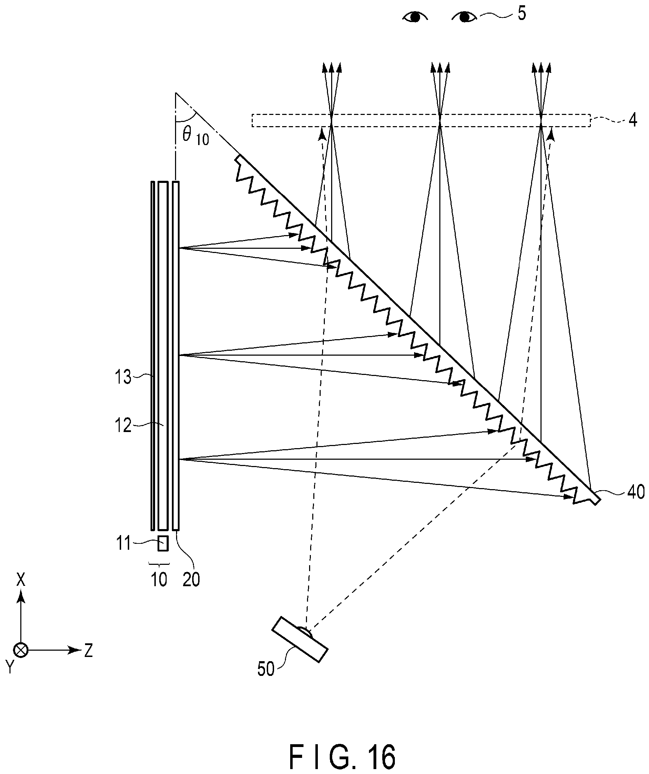

FIG. 16 is a side view of an aerial display apparatus 1 according to a third embodiment of the present invention. In FIG. 16, the X direction is a direction along one side of the display device 20, the Y direction is a direction orthogonal to the X direction in the plane of the display device 20, and the Z direction is a direction orthogonal to the XY plane.

The aerial display apparatus 1 includes an illumination device 10, a display device 20 and an optical device 40. The configuration of each of the illumination device 10, display device 20 and optical device 40 is the same as that in the first embodiment.

The optical device 40 is arranged obliquely at an angle $\theta_{10}$ with respect to the display device 20. The angle $\theta_{10}$ is, for example, 30 degrees to 60 degrees.

The display device 20 emits light in a direction perpendicular to the device surface. Light emitted from the display device 20 enters the optical device 40. The optical device 40 reflects the light incident obliquely from the bottom toward the top. Then, the optical device 40 forms an aerial image 4 in an aerial space. For example, the optical device 40 forms an image displayed on the display device 20 as an aerial image 4 at a position of plane symmetry with the optical device 40 as a symmetry plane. FIG. 16 shows, as an example, a light component of the aerial image 4 formed in plane symmetry with the display device 20 relative to the optical device 40. A viewer 5 in an oblique direction at an angle $\theta_{10}$ with respect to the normal direction of the optical device 40 can visually recognize the aerial image 4.

The image forming position of the aerial image 4 can optionally be set according to the angle formed between the display device 20 and the optical device 40 and the angle of the surface of the optical element 42 of the optical device 40.

The sensing device 50 is arranged between the display device 20 and the optical device 40 and outside the area occupied by the optical device 40 when viewed from the Z direction. The sensing device 50 is so arranged that the device surface faces the bottom of the optical device 40. The sensing device 50 is so arranged that the optical axis of the light source unit 52 passes near the center of the bottom of the optical device 40. The configuration and operation of the sensing device 50 are the same as those of the sensing device of the first embodiment.

According to the third embodiment, the display device 20 can be arranged obliquely to the optical device 40 to achieve the aerial display apparatus 1. The other advantages are the same as those of the first embodiment.

<4> Fourth Embodiment

A fourth embodiment is directed to another configuration example of the optical device 40, wherein the optical device 40 is configured by a dihedral corner reflector array.

<4-1> Configuration of Aerial display apparatus 1

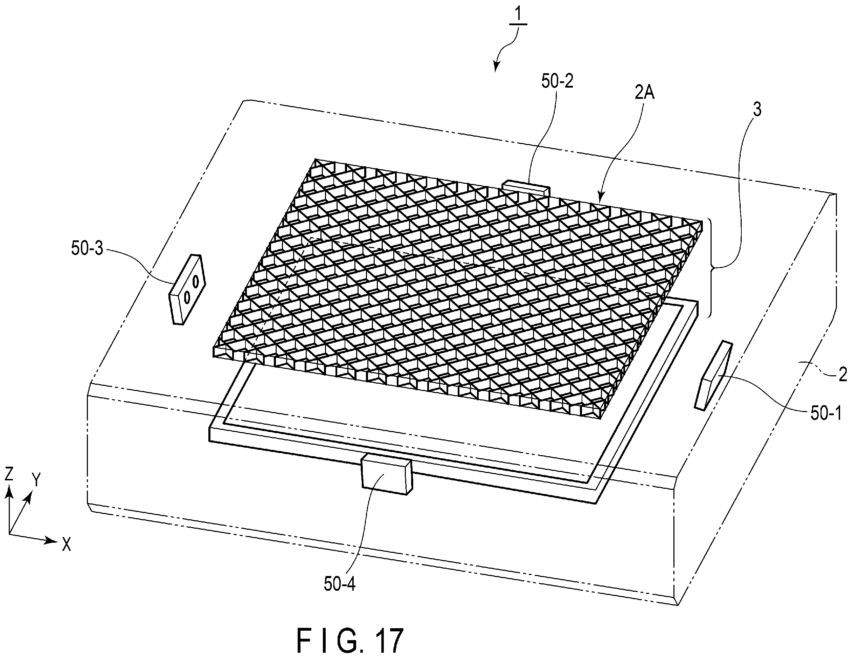

FIG. 17 is a perspective view of an aerial display apparatus 1 according to a fourth embodiment of the present invention. The aerial display apparatus 1 includes a housing 2, a display module 3 and four sensing devices 50-1 to 50-4. For the sake of simplicity, in FIG. 17, some of the elements included in the display module 3 are extracted and shown.

The sensing device 50-1 is arranged on one end of the display module 3 in the X direction and the sensing device 50-3 is arranged on the other end of the display module 3 in the X direction. The sensing device 50-2 is arranged on one end of the display module 3 in the Y direction and the sensing device 50-4 is arranged on the other end of the display module 3 in the Y direction. Each of the sensing devices 50-1 to 50-4 has the same configuration as that of the sensing device 50 of the first embodiment.

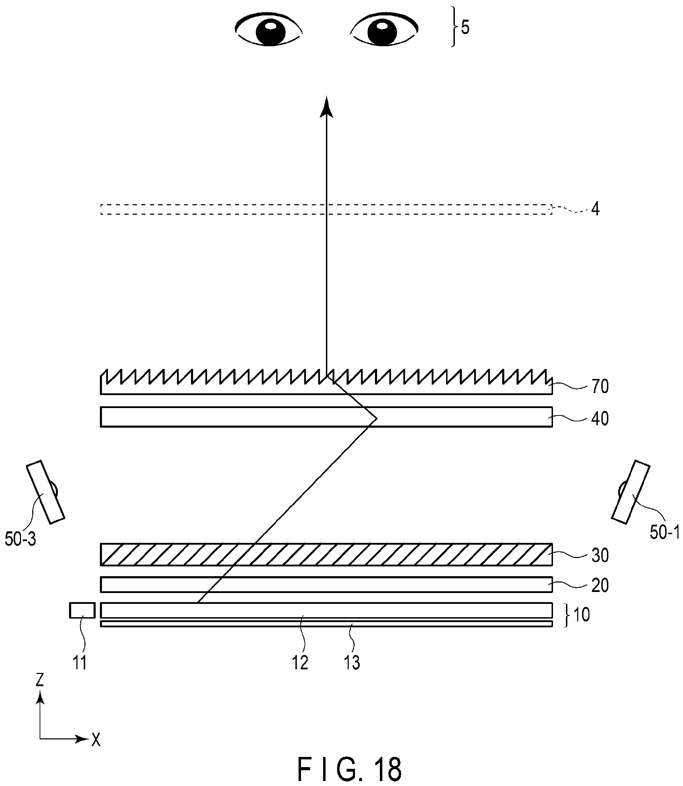

FIG. 18 is a side view of the display module 3 and the sensing device 50 shown in FIG. 17 when viewed from the Y direction. In FIG. 18, neither of the sensing devices 50-2 and 50-4 is shown.

The display module 3 includes an illumination device 10, a display device 20, an alignment control device 30, an optical device 40 and a light path deflection device 70. The configuration of each of the illumination device 10, display device 20 and alignment control device 30 is the same as that in the first embodiment.

The optical device 40 reflects the light incident from the bottom toward the top. The optical device 40 reflects the incident light in a plane symmetry with respect to the device surface. The optical device 40 forms an aerial image in an aerial space.

The light path deflection device 70 refracts the display light incident obliquely from the bottom in the normal direction. A viewer 5 in front of the light path deflection device 70 can visually recognize the aerial image 4.

<4-2> Configuration of Optical Device 40

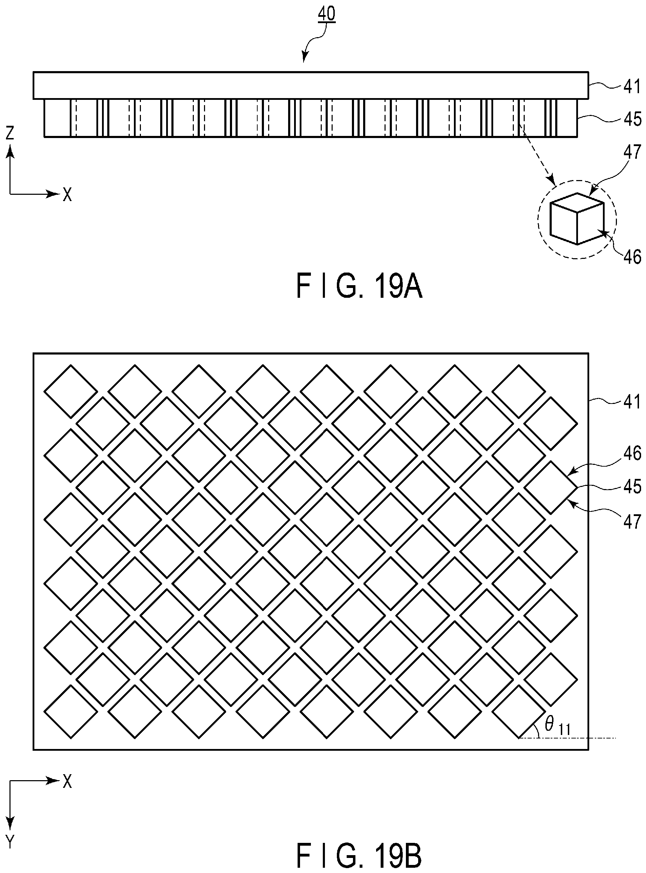

FIG. 19A is a side view of the optical device 40 shown in FIG. 18 when viewed from the Y direction. FIG. 19B is a bottom view of the optical device 40 shown in FIG. 18.

The optical device 40 includes a base member 41 and a plurality of optical elements 45. FIG. 19A is a perspective view of one of the optical elements 45. The base member 41 and the optical elements 45 are formed of a transparent material such as acrylic resin. The base member 41 and the optical elements 45 may be formed integrally as one unit or may be bonded together with a transparent adhesive.

The optical elements 45 are provided on the bottom of the base member 41. Each of the optical elements 45 is formed of a rectangular parallelepiped or a cube. The planar shape of the optical elements 45 is, for example, square. The optical elements 45 each have two reflecting surfaces 46 and 47. The reflecting surfaces 46 and 47 correspond to two sides of the rectangular parallelepiped and are in contact with each other. The reflecting surfaces 46 and 47 constitute a so-called dihedral corner reflector.

The optical elements 45 are arranged such that one side is inclined by angle $\theta_{11}$ with respect to the X direction. The angle $\theta_{11}$ is, for example, 45 degrees. Note that the angle $\theta_{11}$ is not limited to 45 degrees but can be set in a range from 30 degrees to 60 degrees. The optical elements 45 are arranged in a staggered fashion. That is, the optical elements 45 are arranged such that one row extends in a direction of 45 degrees with respect to the X direction and a plurality of rows are arranged in a direction of 45 degrees with respect to the Y direction. The optical elements 45 are spaced away from each other.

The light transmitted through the alignment control device 30 enters the optical elements 45 from the bottoms of the optical elements 45, is reflected twice by the reflecting surfaces 46 and 47, and then is emitted from the top of the optical element 45.

<4-3> Configuration of Light path deflection device 70

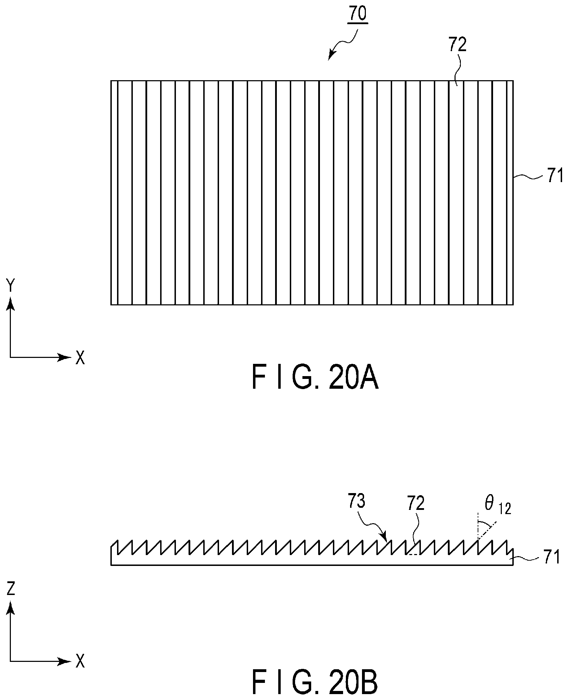

FIG. 20A is a plan view of the light path deflection device 70 shown in FIG. 18. FIG. 20B is a side view of the light path deflection device 70 shown in FIG. 18 when viewed from the Y direction.

The light path deflection device 70 includes a base member 71 and a plurality of triangular prisms 72 provided on the base member 71. The base member 71 and the triangular prisms 72 are formed of a transparent material such as acrylic resin. The base member 71 and the triangular prisms 72 may be formed integrally as one unit or may be bonded together with a transparent adhesive.

The triangular prisms 72 each extend in the Y direction and are arranged in the X direction. The triangular prisms 72 include triangular prisms extending in the Y direction. The triangular prisms 72 each have a refractive surface 73. The refractive surface 73 is inclined by angle $\theta_{12}$ with respect to the normal direction.

The light path deflection device 70 thus configured refracts the display light incident obliquely from the bottom in the normal direction. The angle $\theta_{12}$ of the refractive surface 73 is appropriately set according to the angle of the light incident upon the light path deflection device 70 and the refractive index of the light path deflection device 70.

The light path deflection device 70 may be omitted. In this case, the aerial image is formed at a position in plane symmetry with respect to the optical device 40.

<4-4> Sensing Operation

In the aerial display apparatus 1 configured as described above, the operation of each of the sensing devices 50-1 to 50-4 is the same as that of the sensing device 50 of the first embodiment.

The signals of images picked up by a plurality of cameras 53 included in the sensing devices 50-1 to 50-4 are transmitted to the control unit 60. The position calculation unit 60B calculates the position of an object 6 that has entered a detection region 55, based on the image signals of the cameras 53.

<4-5> Advantages of Fourth Embodiment

According to the fourth embodiment, even if the optical device 40 is configured by a dihedral corner reflector array, an object can be detected using the sensing device 50.

In the fourth embodiment, there is no restriction on the position where the sensing device 50 is arranged. Although the fourth embodiment shows four sensing devices 50-1 to 50-4, the number of sensing devices 50 may be one or two or more.

Note that the third embodiment may be applied to the fourth embodiment. That is, the display device 20 may be arranged obliquely to the optical device 40.

<5> Fifth Embodiment

The fifth embodiment is a modification to the fourth embodiment.

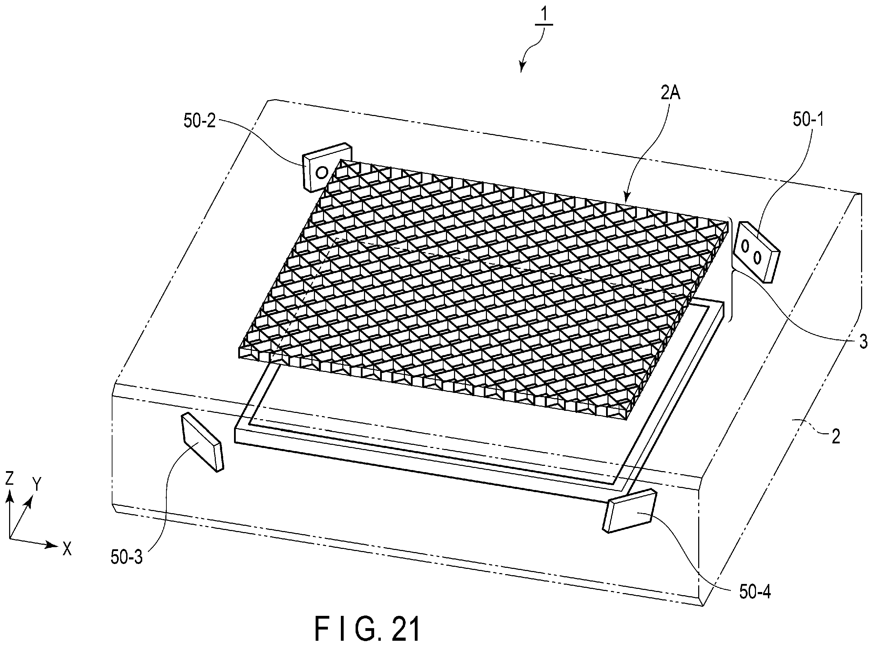

FIG. 21 is a perspective view of an aerial display apparatus 1 according to a modification to the fifth embodiment of the present invention. The aerial display apparatus 1 includes four sensing devices 50-1 to 50-4.

The sensing devices 50-1 to 50-4 are arranged near four corners of the display module 3. The other configurations are the same as those of the fourth embodiment.

In the fifth embodiment, too, an object can be detected using the sensing device 50.

In each of the foregoing embodiments, a liquid crystal display device is exemplified as the display device 20, but the display device 20 is not limited to the liquid crystal display device. The display device 20 may be a self-emitting organic electroluminescence (EL) display device or a micro light emitting diode (LED) display device. The micro-LED display device is a display device that emits red (R), green (G) and blue (B) each constituting a pixel by an LED.

The present invention is not limited to the above embodiments, and various modifications can be made without departing from the gist of the present invention at an implementation stage. In addition, the embodiments may be appropriately combined with each other, and in such a case, combined effects can be attained. Furthermore, various inventions are included in the above-described embodiments, and various inventions can be extracted by combining selected ones of the disclosed structural components. Even if some structural components are omitted from the structural components shown in the embodiment, the configuration without these structural components can be extracted as an invention if the problem can be solved and the effects can be attained.

REFERENCE SIGNS LIST

| 1 | Aerial display apparatus |
| 2 | Housing |
| 2A | Opening |
| 3 | Display module |
| 4 | Aerial image |
| 5 | Viewer |
| 6 | Object |
| 10 | Illumination device |
| 11 | Light source unit |
| 12 | Light guide plate |
| 13 | Reflecting sheet |
| 20 | Display device |
| 30 | Alignment control device |
| 31, 32 | Base member |
| 33 | Transparent member |
| 34 | Light-shielding member |

| 40 | Optical device |
|----|----|
| 41 | Base member |
| 42, 45 | Optical element |
| 50 | Sensing device |
| 51 | Housing |
| 52 | Light source unit |
| 53 | Camera |
| 54 | Sensor controller |
| 55 | Detection region |
| 60 | Control unit |
| 61 | Storage unit |
| 62 | Input/output interface |
| 63 | Input unit |
| 70 | Light path deflection device |
| 71 | Base member |
| 72 | Triangular prism |

**Claims**

1. An aerial display apparatus comprising:

   a display device which displays an image;
   an optical device which is arranged to receive light from the display device, and reflects the light from the display device to a side opposed to the display device to form an aerial image; and
   a first sensing device arranged between the display device and the optical device and outside an area occupied by the optical device,
   wherein the first sensing device includes:

   a light source unit which emits infrared light toward the optical device; and
   a plurality of cameras which detect infrared light reflected in sequence by an object and the optical device.

2. The aerial display apparatus according to claim 1, wherein:

   the optical device includes a planar base member and a plurality of optical elements provided under the base member, each extending in a first direction and arranged in a second direction orthogonal to the first direction; and
   each of the optical elements has an incident surface and a reflecting surface which are inclined with respect to a normal direction of the base member and which are in contact with each other.

3. The aerial display apparatus according to claim 2, wherein an angle of the reflecting surface with respect to the normal direction of the base member is set such that an angle of light incident upon the reflecting surface is larger than a critical angle.

4. The aerial display apparatus according to claim 2, wherein an angle of the incident surface with respect to the normal direction of the base member is set such that an angle of light incident upon the incident surface is smaller than a critical angle.

5. The aerial display apparatus according to claim 2, wherein the first sensing device is arranged in the second direction of the optical device.

6. The aerial display apparatus according to claim 1, wherein the display device and the optical device are arranged in parallel with each other.

7. The aerial display apparatus according to claim 1, further comprising an alignment control device arranged between the display device and the optical device to transmit part of light from the display device.

8. The aerial display apparatus according to claim 1, further comprising a housing which houses the display device, the optical device and the first sensing device.

9. The aerial display apparatus according to claim 1, further comprising a control unit which calculates a position of the object, based on image signals of the cameras.

10. The aerial display apparatus according to claim 1, further comprising a second sensing device which is arranged between the display device and the optical device and outside the area occupied by the optical device, which is opposed to the first sensing device with respect to the optical device, and which has a configuration similar to a configuration of the first sensing device.

F I G . 1

EP 4 465 155 A1

FIG. 2

F I G. 3

F I G. 4A

F I G. 4B

F I G. 5

F I G. 6

FIG.7

40

O

Z

Y

X

F I G. 8

FIG. 9

FIG. 10

F I G. 11

F I G. 12

F I G. 13

F I G. 14

F I G. 15

EP 4 465 155 A1

F I G. 16

F I G . 17

F I G. 18

40

41

45

Z

X

47

46

**F I G. 19A**

41

46
45
47

θ$_{11}$

X

Y

**F I G. 19B**

F I G. 20A

F I G. 20B

FIG. 21

## INTERNATIONAL SEARCH REPORT

| | International application No. |
| --- | --- |
| | **PCT/JP2022/047724** |

**A. CLASSIFICATION OF SUBJECT MATTER**

*G06F 3/042*(2006.01)i; *G02B 5/00*(2006.01)i; *G02B 5/04*(2006.01)i; *G02B 5/08*(2006.01)i; *G02B 30/56*(2020.01)i; *G06F 3/0346*(2013.01)i
FI:     G06F3/042 473; G02B5/00 Z; G02B5/04 A; G02B5/08 A; G02B30/56; G06F3/0346 422

According to International Patent Classification (IPC) or to both national classification and IPC

**B. FIELDS SEARCHED**

Minimum documentation searched (classification system followed by classification symbols)

G06F3/042; G02B5/00; G02B5/04; G02B5/08; G02B30/56; G06F3/0346

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2012/133279 A1 (SHARP KABUSHIKI KAISHA) 04 October 2012 (2012-10-04) paragraphs [0001]-[0039], fig. 1 | 1, 8-10 |
| Y | paragraphs [0001]-[0039], fig. 1 | 2-7 |
| Y | JP 2021-139932 A (TOPPAN PRINTING COMPANY, LIMITED) 16 September 2021 (2021-09-16) paragraphs [0009]-[0053], fig. 1 | 2-7 |
| A | paragraphs [0009]-[0053], fig. 1 | 1, 8-10 |
| A | JP 2014-203323 A (FUNAI ELECTRIC COMPANY, LIMITED) 27 October 2014 (2014-10-27) entire text, all drawings | 1-10 |
| A | JP 2019-003332 A (KONICA MINOLTA, INCORPORATED) 10 January 2019 (2019-01-10) entire text, all drawings | 1-10 |
| A | JP 2017-003981 A (INNOLUX CORPORATION) 05 January 2017 (2017-01-05) paragraphs [0048]-[0049], fig. 7 | 1-10 |

☑ Further documents are listed in the continuation of Box C.      ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **09 March 2023** | **20 March 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2022/047724**

**C.    DOCUMENTS CONSIDERED TO BE RELEVANT**

| Category* | Citation of document, with indication, where appropriate, of the relevant passages | Relevant to claim No. |
|---|---|---|
| A | JP 2018-133019 A (SONY CORPORATION) 23 August 2018 (2018-08-23)<br>paragraph [0021] | 1-10 |
| A | JP 2016-091423 A (SONY CORPORATION) 23 May 2016 (2016-05-23)<br>paragraph [0022] | 1-10 |

Form PCT/ISA/210 (second sheet) (January 2015)

**INTERNATIONAL SEARCH REPORT**
Information on patent family members

International application No.

**PCT/JP2022/047724**

| Patent document cited in search report | | | Publication date (day/month/year) | Patent family member(s) | | | Publication date (day/month/year) |
|---|---|---|---|---|---|---|---|
| WO | 2012/133279 | A1 | 04 October 2012 | (Family: none) | | | |
| JP | 2021-139932 | A | 16 September 2021 | CN paragraphs [0024]-[0084], fig. 1 TW | 115280222 202138882 | A A | |
| JP | 2014-203323 | A | 27 October 2014 | US entire text, all drawings | 2014/0300584 | A1 | |
| JP | 2019-003332 | A | 10 January 2019 | (Family: none) | | | |
| JP | 2017-003981 | A | 05 January 2017 | US paragraphs [0048]-[0049], fig. 7 CN | 2016/0364836 106249423 | A1 A | |
| JP | 2018-133019 | A | 23 August 2018 | US paragraph [0054] CN | 2018/0240213 108459776 | A1 A | |
| JP | 2016-091423 | A | 23 May 2016 | WO paragraph [0022] | 2016/072132 | A1 | |

Form PCT/ISA/210 (patent family annex) (January 2015)

**REFERENCES CITED IN THE DESCRIPTION**

**Patent documents cited in the description**

- JP 2017067933 A